# EUROPEAN PATENT APPLICATION

(11) **EP 2 107 416 A1**
(43) Date of publication of application: **07.10.2009**
(21) Application number: 08290335.2
(22) Date of filing: 04.04.2008
(51) Int. Cl.: G02C 5/18

(54) **Safety eyeglasses having side shield**

(71) Applicant: Eureka Inc., Dalseo-gu (KR)
(72) Inventor: Sohn, Chung-Be, Dalseo Goo Taegu (KR)
(74) Representative: Corret, Hélène

(57) **Abstract**

Safety eyeglasses having a metal frame are provided with integrally molded side shields. The frame includes a lens frame, a pair of eyeglasses temples, and a pair of side shields made of a synthetic resin and integrally joined to the eyeglasses temples, **characterized in that** each of the side shields comprises: a groove formed on a given position of a flat portion of each eyeglasses temple in the vicinity of a hinge portion of each eyeglasses temple, such that the groove is filled with a synthetic resin solution forming the side shields, so as to fix the side shields onto the eyeglasses temples; and a front cover extended inwardly from the front side thereof in such a manner as to be overlaid onto a portion of the lens frame, so as to block a space portion formed between the lens frame and each side shield.

## Description

### BACKGROUND OF THE INVENTION

### Field of the Invention

The present invention relates to safety eyeglasses having side shields capable of protecting the eyes of a wearer from foreign substances in work environments, and more particularly, to safety eyeglasses with side shields formed of a synthetic resin that is integrally joined to metal eyeglasses temples of an eyeglass frame.

### Background of the Related Art

As is well known, in certain working environments involving grinding operations or the handling of particular substances, there is a possibility of foreign substances striking the eyes of an eyeglass wear through the sides of the eyeglasses, thereby causing injury or irritation to the eyes and the surrounding skin. To prevent such problems, side shields are attached to the eyeglasses temples of the eyeglasses.

The side shields are generally fixed to the eyeglasses temples of the eyeglasses, and when the eyeglasses temples are folded, they are folded together with the eyeglasses temples. And, such the side shields typically have a length of about 5 cm extending from a hinge portion of the side of an eyeglasses frame toward the end portion fixed to the wearer's ear, and are often made of a transparent synthetic resin material, wherein if the eyeglasses frame is made of a snthetic resin, the side shields may be formed as part of the eyeglasses temples, but if the eyeglasses frame is made of metal, such the transparent synthetic resin side shields are separately fabricated and coupled to the eyeglasses temples.

Side shields for safety eyeglasses having metal frames are either detachably or permanently connected to the metal eyeglasses temples. The first type of side shields may be detachably mounted securely on the eyeglasses temples of the safety eyeglasses, and the second type of side shields may be never separated from the eyeglasses temples of the safety eyeglasses once they are connected.

In case of the first type of side shields, no structure for completely preventing the separation after connecting is provided such that the side shields upon connection are just fixed to their original position. By the way, since the wearer generally prepares separate safety eyeglasses together with his or her eyeglasses used normally, he or she does not need to separate the side shields from the eyeglasses after the connection. Furthermore, it is actually inconvenient to separate and connect the side shields from and with the eyeglasses temples, thereby having no need for a structure for separating the side shields from the eyeglasses temples.

Recently, the second type of side shields never separated from the eyeglasses temples after connection with the eyeglasses temples are increasingly popular to the safety eyeglasses wearers, wherein a locking mechanism is provided after the eyeglasses temples and the side shields are forcedly connected to each other, thereby preventing the side shields and the eyeglasses temples from being separated from each other, and otherwise, they are not separable from each other by means of riveting after the connection.

In case of the second type of side shields for safety eyeglasses, by the way, some problems still remain. First, a substantially delicate structure for the locking means for the connection with the eyeglasses should be needed. That is, the locking means like a locking protrusion or a locking groove portion should be precisely made in order to prevent the separation of the side shields from the eyeglasses temples after the connection, such that while a lot of force is not being applied to connect the side shields with the eyeglasses temples, no damage or breakage is caused upon the connection, and no separation after the connection happens.

On the other hand, if the separation of the side shields from the eyeglasses temples is to be prevented by means of riveting, holes should be formed upon manufacturing the eyeglasses temples and the side shields, and after that, the riveting should be additionally carried out. As a result, this makes it inconvenient to work.

As another problem, the eyeglasses frame and the side shields have to be separately manufactured and managed until the eyeglasses having the side shields are made and sold.

In other words, the eyeglasses frame and the side shields are made in respective processes, and the side shields for each eyeglasses frame are made, packaged, conveyed, and sold. This gives many inconveniences, and moreover, it is uncomfortable for a seller or buyer to connect the eyeglasses frame with the side shields.

Additionally, the safety eyeglasses have a space portion formed structurally between a lens frame and a side shield during the usage, such that foreign substances may enter the space portion, which causes the side shielding functions of the side shields to be performed badly.

### SUMMARY OF THE INVENTION

Accordingly, the present invention has been made in view of the above-mentioned problems occurring in the prior art, and it is an object of the present invention to provide safety eyeglasses having side shields in which metal eyeglasses temples are integrally formed with the side shields formed of synthetic resin, thereby making it convenient to manufacture and manage the safety eyeglasses having the side shields, and in which the side shields are structured wherein a space portion formed structurally between a lens frame and the side shield is blocked by means of a front cover extended inwardly from the front side of each side shield in such a manner as to be overlaid over a portion of the lens frame, thereby preventing foreign substances from entering the space portion.

To accomplish the above object, according to the present invention, there are provided safety eyeglasses having a lens frame, a pair of eyeglasses temples, and a pair of side shields made of a synthetic resin and integrally joined to the eyeglasses temples, **characterized in that** each of the side shields comprises: a groove formed on a given position of a flat portion of each eyeglasses temple in the vicinity of a hinge portion of each eyeglasses temple irrespective of the operation and structure of the hinge portion, such that the groove is filled with a synthetic resin solution forming the side shields, upon the injection of the side shields, so as to fix the side shields onto the eyeglasses temples; and a front cover extended inwardly from the front side thereof in such a manner as to be overlaid onto a portion of the lens frame, so as to block a space portion formed between the lens frame and each side shield.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a perspective view showing a part of safety eyeglasses according to a preferred embodiment of the present invention;

FIG.2 is a plane view showing the partially fractured safety eyeglasses according to the preferred embodiment of the present invention;

FIG.3 is a front view showing the safety eyeglasses according to the preferred embodiment of the present invention;

FIG.4 is a side view showing the main parts of the safety eyeglasses according to the preferred embodiment of the present invention;

FIG.5 is an enlarged sectional view showing the line A--A of FIG.4;

FIG.6 is a perspective view showing one example of a groove formed on an eyeglasses temple adopted in the preferred embodiment of the present invention; and

FIGS.7 and 8 are partly perspective views showing other examples of grooves adopted in the preferred embodiment of the present invention.

### DETAILED DESCRIPTION OF THE PREFERRED EMBODIMENT

Reference will now be made in detail to the preferred embodiment of the present invention, examples of which are illustrated in the accompanying drawings.

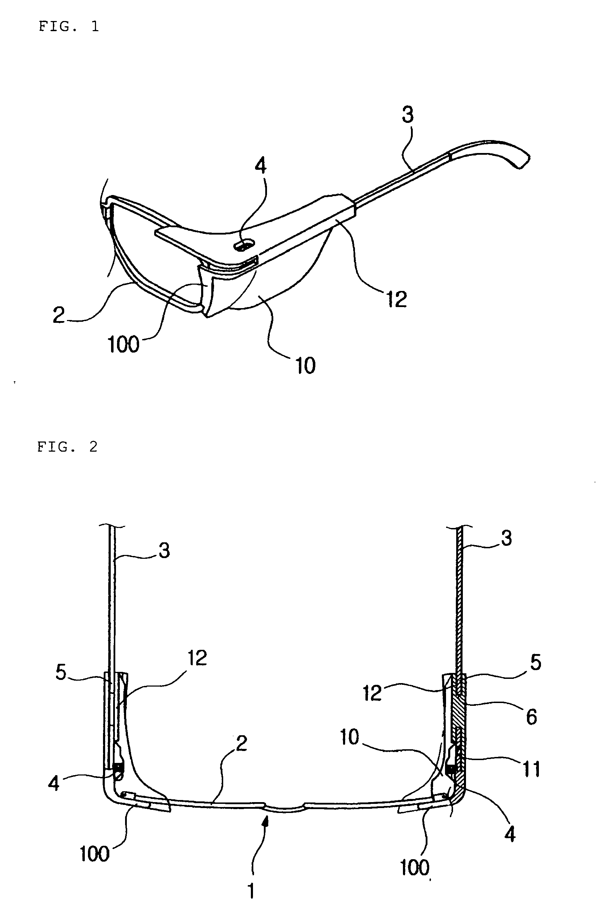

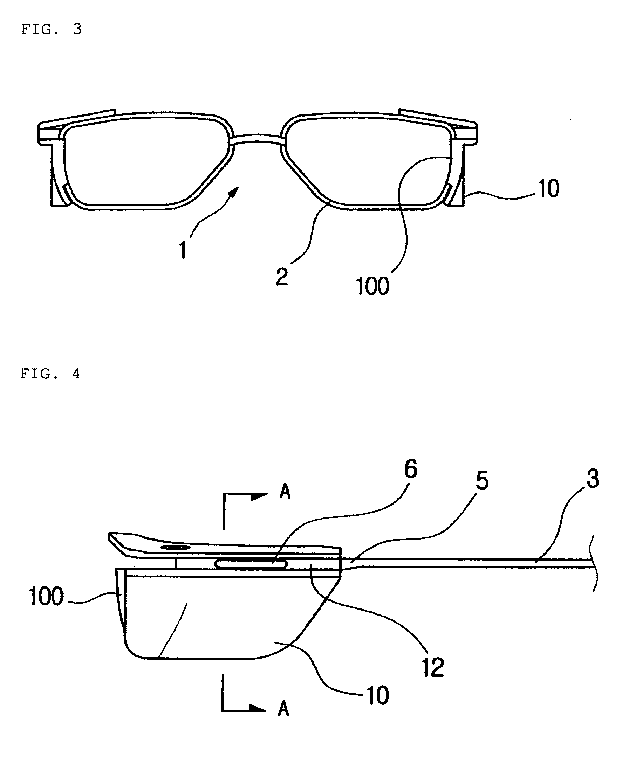

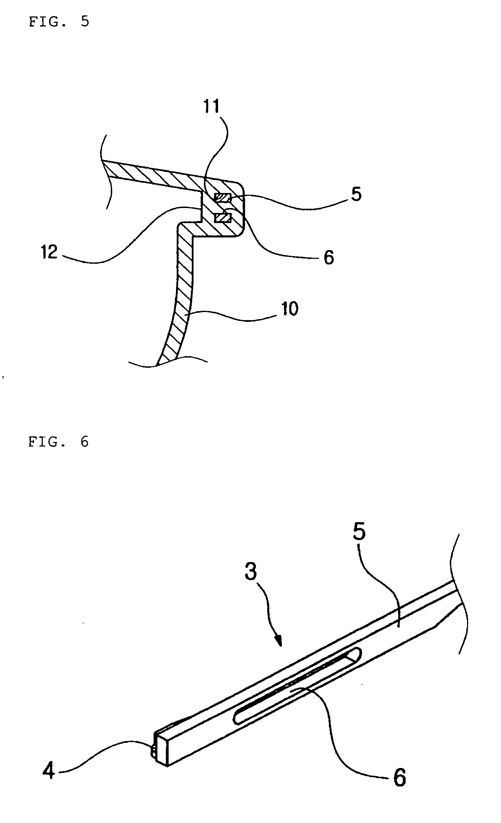

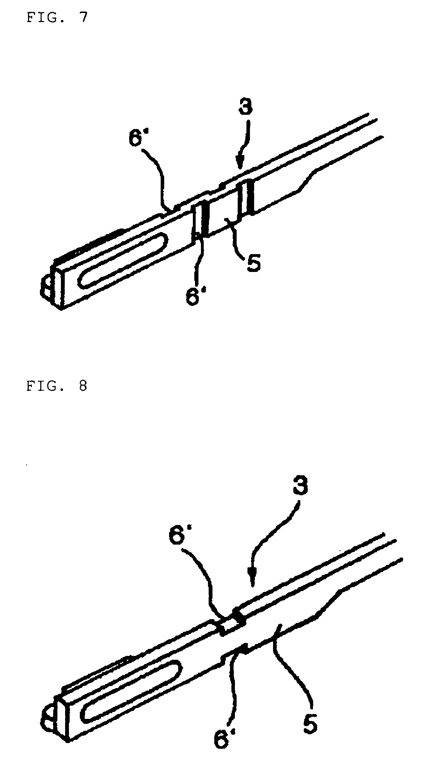

FIG.1 is a perspective view showing a part of safety eyeglasses according to a preferred embodiment of the present invention, FIG.2 is a plane view showing the partially fractured safety eyeglasses according to the preferred embodiment of the present invention, FIG.3 is a front view showing the safety eyeglasses according to the preferred embodiment of the present invention, FIG.4 is a side view showing the main parts of the safety eyeglasses according to the preferred embodiment of the present invention, FIG.5 is an enlarged sectional view showing the line A--A of FIG.4, FIG.6 is a perspective view showing one example of a groove formed on an eyeglasses temple adopted in the preferred embodiment of the present invention, and FIGS.7 and 8 are partly perspective views showing other examples of grooves adopted in the preferred embodiment of the present invention.

The present invention relates to safety eyeglasses 1 including a lens frame 2, an eyeglasses temple 3, and a side shield 10.

According to the present invention, upon making the eyeglasses temple 3 of the safety eyeglasses 1, an elongated groove 6 is formed on a flat portion 5 of the eyeglasses temple 3 in the vicinity of a hinge portion 4 of the eyeglasses temple 3 irrespective of the structure of the hinge portion 4 such that a synthetic resin solution is poured and hardened into the groove 6 thereby fixing the side shield 10 onto the eyeglasses temple 3.

That is, the eyeglasses temple 3 is first mounted on an injection mold, and the synthetic resin solution is poured into the injection mold thereby forming the side shield 10. The side shield 10 includes a front cover 100 extended inwardly from the front side thereof in such a manner as to be overlaid over a portion of the lens frame 2, for blocking a space portion between the lens frame 2 and the side shield 10, an elongated concave portion 11 along which the eyeglasses temple 3 is mounted, and a fixing portion 12 of the concave portion 11 for fully surrounding the flat portion 5 of the eyeglasses temple 3 having the groove 6 formed thereon, and under the above construction, as the injection solution is filled and hardened into the groove 6 of the eyeglasses temple 3, the eyeglasses temple 3 and the side shield 10 are integrally joined to each other.

The groove 6 that is filled with the injection solution is basically formed as a hole as shown in FIGS.5 and 6, but a groove 6' as shown in FIGS.7 and 8 may be formed in such a manner as to be concave on the upper and lower surfaces or the sides of the flat portion 5 of the eyeglasses temple 3, which of course achieves the same effect as shown in FIGS.5 and 6.

In making the safety eyeglasses with the side shield formed integrally therewith, according to the present invention, the eyeglasses temple 3 on which the groove 6 is formed is first made and then, at a state where the eyeglasses temple 3 is mounted on an injection mold, injection molding is carried out. As a result, the injection solution is filled and hardened into the groove 6, thereby making the eyeglasses temple 3 integrally formed with the side shield 10. This enables the manufacturing process and management system to be very simpler than those in conventional safety eyeglasses.

Also, there is no need for the precision in constructing the locking means on the eyeglasses temple and the side shield, and no riveting for integrally forming the eyeglasses temple and the side shield is carried out. Therefore, if the groove 6 is just formed in making the eyeglasses temple 3, the safety eyeglasses of this invention will achieve complete integration with the side shield 10 by means of injection molding, which enables the production costs of the safety eyeglasses to be substantially low.

Furthermore, a seller or buyer does not need to connect the eyeglasses frame with the side shield, which makes it convenient to sell or buy the safety eyeglasses of this invention.

Especially, the side shield 10 has the front cover 100 formed integrally therewith in such a manner as to be extended inwardly from the front side thereof, such that during the usage of the safety eyeglasses, the front cover 100 is overlaid onto a portion of the lens frame 2, thereby preventing foreign substances from entering the space portion formed between the lens frame 2 and the side shield 10.

As set forth in the foregoing, the safety eyeglasses according to the present invention can be provided with the front cover formed integrally therewith in such a manner as to be extended inwardly from the front side thereof, thereby completely preventing foreign substances from entering the space portion formed between the lens frame and the side shield to permit the side shielding functions protecting a wearer's eyes to be improved; can be formed integrally with the side shield in a very simple manner, thereby decreasing the production costs to provide a substantially low-priced product; and can be easily manufactured and managed, thereby making it convenient to sell and buy to provide great satisfaction to all of the maker, seller, and buyer.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. Safety eyeglasses having a lens frame, a pair of eyeglasses temples, and a pair of side shields made of a synthetic resin and integrally joined to the eyeglasses temples, **characterized in that** each of the side shields comprises: a groove formed on a given position of a flat portion of each eyeglasses temple in the vicinity of a hinge portion of each eyeglasses temple irrespective of the operation and structure of the hinge portion, such that the groove is filled with a synthetic resin solution forming the side shields, upon the injection of the side shields, so as to fix the side shields onto the eyeglasses temples; and a front cover extended inwardly from the front side thereof in such a manner as to be overlaid onto a portion of the lens frame, so as to block a space portion formed between the lens frame and each side shield.

2. The safety eyeglasses according to claim 1, wherein the groove adapted to be filled with the synthetic resin solution forming the side shields is a generally elongated through-hole formed to penetrate the flat portion of each eyeglasses temple.

3. The safety eyeglasses according to claim 1, wherein the groove adapted to be filled with the synthetic resin solution forming the side shields is formed concave on the upper and lower surfaces or the sides of the flat portion of each eyeglasses temple.
